# EUROPÄISCHE PATENTSCHRIFT

(11) **EP 0 556 430 B1**
(45) Veröffentlichungstag und Bekanntmachung des Hinweises auf die Patenterteilung: **30.09.1998**
(21) Anmeldenummer: 92102775.1
(22) Anmeldetag: 19.02.1992
(51) Int. Cl.: G06F 12/08, G06F 3/06

(54) **Verfahren zur Steuerung eines Peripheriesystems**
Method for controlling a peripheral system
Procédé de commande d'un système peripherique

(43) Veröffentlichungstag der Anmeldung: 25.08.1993
(73) Patentinhaber: Siemens Nixdorf Informationssysteme Aktiengesellschaft, 33102 Paderborn (DE)
(72) Erfinder: Beck, Helmut, Dr.rer.nat., W-8044 Unterschleissheim (DE); Herrmann, Dieter, Dr.rer.nat., W-8000 München 50 (DE); Kunz, Siegfried, Dipl.-Ing., W-8011 Hohenlinden (DE); Rauschert, Rainer, Dr.-Ing., W-8000 München 83 (DE)
(74) Vertreter: Epping, Wilhelm, Dr.-Ing.

(56) Entgegenhaltungen:
- EP-A- 0 114 944
- EP-A- 0 282 877
- US-A- 4 868 734
- IBM TECHNICAL DISCLOSURE BULLETIN Bd. 26, Nr. 4, September 1983, ARMONK, NY, US Seiten 1855 - 1857; E. D. BAKER ET AL: 'ELECTRONIC DISKETTE UNIT'

## Beschreibung

Die Erfindung betrifft ein Verfahren zur Steuerung eines Peripheriesystems, bestehend aus Speichergeräten, insbesondere Plattenspeichern, mit angeschlossenen gerätenahen Steuerungen und einer gemeinsamen Datenübertragungssteuerung, entsprechend dem Oberbegriff des Patentanspruches 1.

US-A-4 868 734 zeigt ein solches System mit einem verbesserten Ein-/Ausgabe Subsystem wobei ein Cache-Speicher verwendet wird um die Datenübertragung vom Ein-/Ausgabebus des Subsystems zum Prozessorbus zu synchronisieren, so daß die Datenübertragungsrate vom Prozessorbus gesteuert wird.

Periphere Speichergeräte, wie z.B. Plattenspeicher, werden in der Regel durch zugehörige gerätenahe Steuerungen in Verbindung mit einer vorgeschalteten gemeinsamen Datenübertragungssteuerung, die mit einem Datenverarbeitungssystem, beispielsweise über Ein-/Ausgabekanäle eines Kanalsystems, verbunden ist, gesteuert. Zur Durchführung von Ein-/Ausgabeoperationen wird vom Datenverarbeitungssystem jeweils ein Maschinenbefehl bereitgestellt, der das Starten eines im Hauptspeicher des Datenverarbeitungssystems gespeicherten Kanalprogramms bewirkt und eine Geräteadresse zur Ansteuerung eines der Speichergeräte übergibt. Das Kanalprogramm weist einen oder mehrere Kanalbefehle auf, die jeweils nacheinander an die gemeinsame Datenübertragungssteuerung übergeben werden.

Das Datenverarbeitungssystem wendet sich mit seinen Befehlen unmittelbar an die Speichergeräte des Peripheriesystems, während die Steuerungen als Schnittstellen zwischen dem Kanalprogramm und den adressierten Speichergeräten für die Ein-/Ausgabesoftware transparent bleibt.

Es liegt der Erfindung die Aufgabe zugrunde, ein Verfahren zur Steuerung eines Peripheriesystems der eingangs genannten Art zu schaffen, durch das bei Aufrechterhaltung der Transparenz weitere Steuerfunktionen zur Steigerung der Verarbeitungsleistung im Peripheriesystem ausgeführt werden können.

Diese Aufgabe wird gemäß der Erfindung dadurch gelöst, daß von den möglichen Geräteadressen eine vorgegebene und keinem der Speichergeräte zugeordnete Geräteadresse dazu verwendet wird, innerhalb des Peripheriesystems von der Datenübertragungssteuerung auszuführende geräteübergreifende Steueroperationen einzuleiten, wobei die jeweils auszuführenden Steueroperationen durch gesonderte Kanalbefehle gekennzeichnet werden.

Die Reservierung einer eigenen Geräteadresse für die Ausführung geräteübergreifender, durch gesonderte Kanalbefehle gekennzeichneter Steueroperationen hat den Vorteil, daß eine entkoppelnde Wirkung auf die Steuerung der angeschlossenen Speichergeräte und auf die Einleitung der von der Datenübertragungssteuerung auszuführenden Steueroperationen erzielt wird. Durch das erfindungsgemäße Verfahren läßt sich beispielsweise ein Cachespeicher zur Beschleunigung der Ein-/Ausgabeoperationen steuern und verwalten, ohne daß die unter Umständen sehr umfangreiche Gerätetreibersoftware geändert werden muß. Die Steuerung spezifischer, geräteübergreifender Operationen kann von der gemeinsamen Datenübertragungssteuerung des Peripheriesystems unabhängig von der Nutzung der Speichergeräte in gleicher Weise wie die üblichen Ein-/Ausgabeoperationen abgewickelt werden.

Gemäß einer Weiterbildung der Erfindung in Patentanspruch 2 betreffen die geräteübergreifenden Steueroperationen einen mit der Datenübertragungssteuerung gekoppelten gesonderten Halbleiterspeicher.

Entsprechend den Ansprüchen 3 bis 5 wird der Halbleiterspeicher als gemeinsamer Cachespeicher für die in Verbindung mit der Datenübertragungssteuerung kontrollierten Speichergeräte betrieben oder zur Nachbildung von Speichergeräten als Halbleiterspeichergeräte oder als gemeinsame Speicher zum einen Teil als Cachespeicher und zum anderen Teil für die Bildung von Halbleiterspeichergeräten verwendet. Im letzteren Fall ist ein Datenaustausch zwischen dem Cachespeicher und den Halbleiterspeichergeräten, die von der Datenübertragungssteuerung in gleicher Weise wie die üblichen Speichergeräte des Peripheriesystems anhand individuell zugeordneter Geräteadressen angesteuert und kontrolliert werden, ausgeschlossen.

Die Verwendung des Halbleiterspeichers als Cachespeicher und/ oder für die Bildung von Halbleiterspeichergeräten bewirkt eine Beschleunigung der Antwortzeiten bei der Durchführung von Ein-/Ausgabeoperationen gegenüber einem lediglich aus in bekannter Weise kontrollierten Speichergeräten bestehenden Peripheriesystem.

Im Rahmen der geräteübergreifenden Steueroperationen werden gemäß einer anderen Weiterbildung der Erfindung entsprechend dem Patentanspruch 6 zusätzliche Informationen zur Verwendung des Halbleiterspeichers als Cachespeicher und/oder für die Bildung von Halbleiterspeichergeräten an die Datenübertragungssteuerung übergeben.

Die zusätzlichen Informationen enthalten entsprechend den Patentansprüchen 7 bis 10 gesonderte Steuerinformationen zum Einrichten von Cachespeicherbereichen und/oder Halbleiterspeichergeräten, Angaben über die Zuordnung von mindestens einem Speichergerät zu jeweils genau einem eingerichteten Cachespeicherbereich, Angaben über die maximale Speichergröße und über das jeweilige Blockformat der einzurichtenden Cachespeicherbereiche und/oder Halbleiterspeichergeräte, sowie Angaben über die Anzahl von im voraus zu lesenden Datenblöcken bei einem Zugriff auf einen im Cachespeicherbereich des zugeordneten Speichergeräts befindlichen Datenblock. Durch die flexible Unterteilung des Halbleiterspeichers in von einander unabhängige Cachespeicherbereiche und/oder in Bereiche zur Nachbildung von Speichergeräten kann für jede durchzuführende Ein-/ Ausgabeoperation festgelegt werden, ob und in welcher Größe ein schneller Zwischenspeicher eingerichtet wird.

Entsprechend den Patentansprüchen 11 und 12 enthalten die zusätzlichen Informationen gesonderte Steuerinformationen, anhand derer das Auflösen eines eingerichteten Cachespeichers und/oder Halbleiterspeichergeräts veranlaßt und die Auslagerung von in einem Cachespeicherbereich eingetragenen Daten, die noch nicht im zugeordneten Speichergerät gespeichert sind, zum Speichergerät eingeleitet werden. Dabei erfolgt die Aufhebung sämtlicher Zuordnungen von Speichergeräten zu dem Cachespeicherbereich. Somit wird sichergestellt, daß die in einem Zwischenspeicher gespeicherten Daten, die noch kein gültiges Abbild auf dem zugeordneten Speichergerät haben, gesichert werden, bevor der Zwischenspeicher aufgelöst wird.

Zweckmäßige Weiterbildungen der Erfindung beinhalten die Patentansprüche 13 und 14, wonach bei der Einrichtung der Cachespeicherbereiche und/oder Halbleiterspeichergeräte sowie bei deren Betrieb gewonnene Verwaltungsdaten in einem gesonderten Verwaltungsspeicher abgespeichert und im Rahmen der geräteübergreifenden Steueroperationen von der Datenübertragungssteuerung die Verwaltungsdaten aus dem Verwaltungsspeicher gelesen und an das Datenverarbeitungssystem übergeben werden.

Weitere vorteilhafte Maßnahmen zur effektiveren Gestaltung des Peripheriesystems entsprechend den Patentansprüchen 15 bis 17 können bei der Durchführung der einzelnen Ein-/Ausgabeoperationen anhand von gesonderten Steuerinformationen in einem Kanalbefehl eingeleitet werden.

Die Erfindung wird anhand eines in der Zeichnung dargestellten Ausführungsbeispiels näher erläutert. Im einzelnen zeigen
Figur 1 ein Blockschaltbild für ein Peripheriesystem, das nach dem erfindungsgemäßen Verfahren betrieben wird,
Figur 2 den Aufbau eines Kanalbefehlswortes zur Kennzeichnung der auszuführenden geräteübergreifenden Steueroperationen und
Figur 3 ein Flußdiagramm für den Steuerungsablauf im Peripheriesystem gemäß Figur 1.

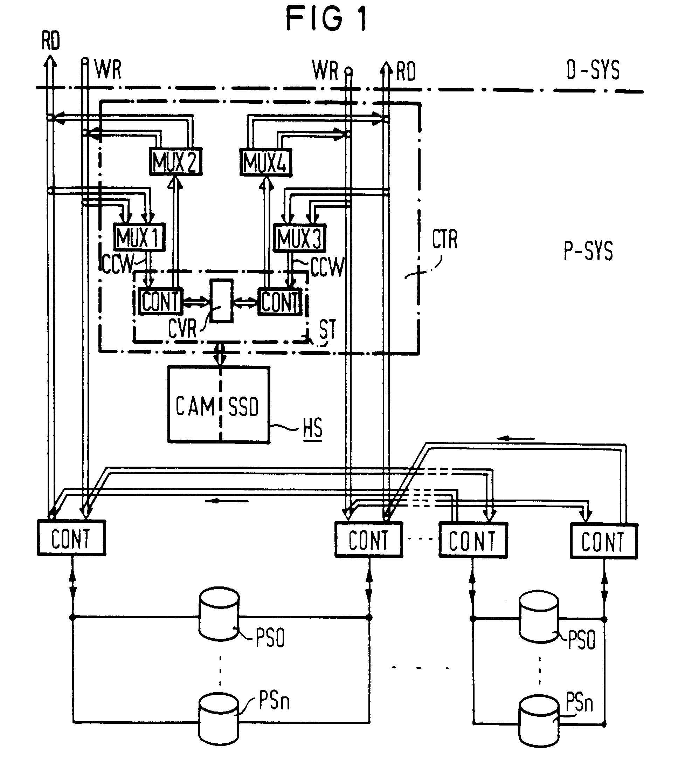

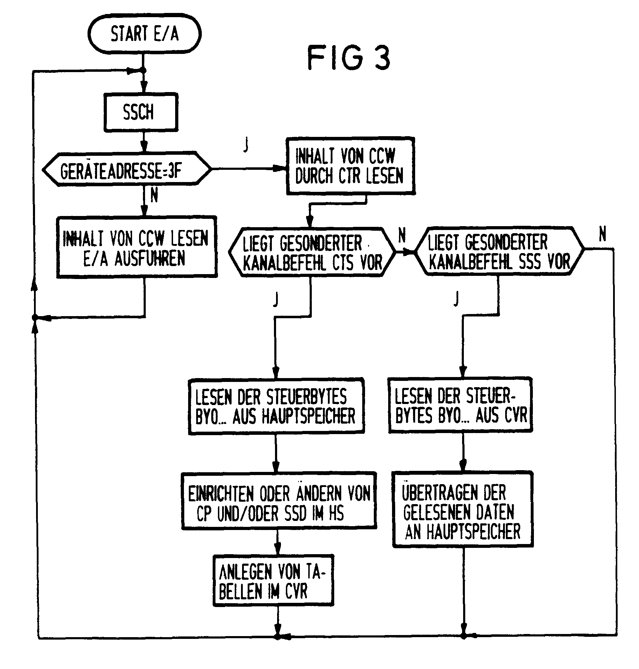

Figur 1 zeigt das Blockschaltbild eines Peripheriesystems P-SYS, das über getrennt dargestellte Datenpfade für Lesen RD und Schreiben WR mit einem übergeordneten Datenverarbeitungssystem D-SYS verbunden ist. Das Peripheriesystem P-SYS weist eine Vielzahl von Speichergeräten, beispielsweise Plattenspeichern PSO..., auf, von denen eine Gruppe von Plattenspeichern PS0...PSn zu jeweils einem Ein-/Ausgabesystem zusammengefaßt sind. Die Plattenspeicher PSO...PSn eines Ein-Ausgabesystems sind über jeweils zwei bidirektional ausgebildete Geräteanschlußpfade mit vorgeschalteten gerätenahen Plattensteuerungen CONT gekoppelt. Der Aufbau einer derartigen Plattensteuerung CONT ist aus der Abbildung in Figur 3 der EP-B1 0 282 877 bekannt.

Außer den gerätenahen Plattensteuerungen CONT weist das Peripheriesystem P-SYS eine gemeinsame Datenübertragungssteuerung CTR auf, die zwischen den passiven Speichergeräten mit den angeschlossenen Plattensteuerungen CONT und dem Datenverarbeitungssystem D-SYS angeordnet ist. Der gemeinsamen Datenübertragungssteuerung CTR obliegt im Peripheriesystem P-SYS die Kontrolle und Steuerung des Ablaufs von Ein-/Ausgabeoperationen sowie die erfindungsgemäße Ausführung geräteübergreifender Steueroperationen, insbesondere die Steuerung und Verwaltung eines nicht flüchtigen, mit der Datenübertragungssteuerung CTR verbundenen Halbleiterspeichers HS. Die beiden für die Lese- und Schreibrichtung RD und WR vorgesehenen Datenpfade verlaufen im Peripheriesystem P-SYS zu jeweils einer gerätenahen Plattensteuerung CONT. Im gewählten Ausführungsbeispiel kann somit aus zwei Datenpfaden für jede Richtung ein Datenpfad jeweils zur Abwicklung einer Lese- oder Schreiboperation vom Datenverarbeitungssystem D-SYS ausgewählt werden. Eine Ausdehnung des Systems auf vier Datenpfade pro Lese- und Schreibrichtung ist möglich, jedoch aus Übersichtlichkeitsgründen nicht dargestellt.

Die Datenübertragungssteuerung CTR weist mehrere mit den Datenpfaden verbundene Auswahlschalter MUX1...MUX4 zur Wegesteuerung auf, von denen jeweils zwei Auswahlschalter MUX1, MUX3 bzw. MUX2, MUX4 für die Aufnahme bzw. die Ausgabe von Daten und Steuerinformationen vorgesehen sind. Die Ausgänge der Auswahlschalter MUX1 und MUX3 bzw. die Eingänge der Auswahlschalter MUX2 und MUX4 sind an die Eingänge bzw. Ausgänge einer Steuereinheit ST angeschlossen. Die Steuereinheit ST, die zwei mit den jeweiligen Datenpfaden für das Schreiben und das Lesen gekoppelte Plattensteuerungen CONT sowie einen von beiden Plattensteuerungen adressierbaren gesonderten Verwaltungsspeicher CVR aufweist, bildet dabei in der Datenübertragungssteuerung CTR die Schnittstelle zum nachgeschalteten Halbleiterspeicher HS.

Eine Ein-/Ausgabeoperation wird jeweils mit einem festgelegten Maschinenbefehl (Start Subchannel) vom Datenverarbeitungssystem D-SYS gestartet, durch den ein Datenübertragungspfad im Datenverarbeitungssystem D-SYS, beispielsweise einer von mehreren Kanalpfaden eines Kanalsystems, und eine Geräteadresse zur Ansteuerung eines der Speichergeräte im Peripheriesystem P-SYS festgelegt werden. Als Folge dieses Maschinenbefehls wird ein im Hauptspeicher des Datenverarbeitungssystems D-SYS hinterlegtes Kanalprogramm, bestehend aus einem oder mehreren Kanalbefehlswörtern CCW, abgearbeitet. Jedes gelesene Kanalbefehlswort CCW spezifiziert einen Kanalbefehl zur Durchführung einer Ein-/Ausgabeoperation, der über den indirekt im Maschinenbefehl festgelegten Datenpfad an das Peripheriesystem P-SYS übergeben wird. Abhängig von der Auswahl des einen oder des anderen Datenpfades für die Schreibrichtung WR wird der Inhalt des Kanalbefehlswortes CCW entweder vom Auswahl schalter MUX1 oder vom Auswahlschalter MUX3 in eine der beiden Plattensteuerungen CONT der Steuereinheit ST durchgeschaltet und somit in der Datenübertragungssteuerung CTR gespeichert.

Von den jeweils über den Maschinenbefehl angebbaren Geräteadressen für die Durchführung von gerätespezifischen Ein-/ Ausgabeoperationen wird gemäß der Erfindung eine vorgegebene Geräteadresse zur Einleitung geräteübergreifender Steueroperationen innerhalb des Peripheriesystems P-SYS reserviert. Die Verwendung einer derartigen gesonderten Adresse bewirkt, daß von der Datenübertragungssteuerung CTR geräteübergreifende Steueroperationen in gleicher Weise wie die gerätespezifischen Ein-/Ausgabeoperationen ausgeführt werden können. Dies wird erreicht, ohne Änderungen an der Schnittstelle von der Ein-/ Ausgabesoftware des übergeordneten Datenverarbeitungssystems D-SYS zur Datenübertragungssteuerung CTR des Peripheriesystems P-SYS vornehmen zu müssen.

Die von der Datenübertragungssteuerung CTR jeweils auszuführenden geräteübergreifenden Steueroperationen werden durch gesonderte Kanalbefehle gekennzeichnet, die in den Kanalbefehlswörtern CCW enthalten sind. Insbesondere betreffen die geräteübergreifenden Steueroperationen den mit der Datenübertragungssteuerung CTR gekoppelten Halbleiterspeicher HS, der als gemeinsamer Cachespeicher CAM für die Plattenspeicher PSO... betrieben oder zur Nachbildung von den Plattenspeichern PSO... entsprechenden Halbleiterspeichergeräten SSD verwendet wird. In einer weiteren Betriebsart kann der Halbleiterspeicher HS als gemeinsamer Speicher des Peripheriesystems P-SYS zum einen Teil als Cachespeicher CAM und zum anderen Teil für die Bildung von Halbleiterspeichergeräten SSD verwendet werden, wobei ein Datenaustausch zwischen dem Cachespeicher CAM und den Halbleiterspeichergeräten SSD nicht direkt möglich ist.

Die einzelnen Verwendungsarten des Halbleiterspeichers werden im Rahmen der geräteübergreifenden Steueroperation durch zusätzliche vom Datenverarbeitungssystem D-SYS an die Datenübertragungssteuerung CTR übergebene Informationen festgelegt. Jedes der schnellen Halbleiterspeichergeräte SSD (Solid State Disc) erhält durch die zusätzlichen Informationen eine individuell zugeordnete Geräteadresse, anhand derer das Halbleiterspeichergerät in gleicher Weise wie ein Plattenspeicher im Peripheriesystem P-SYS angesteuert und kontrolliert werden kann.

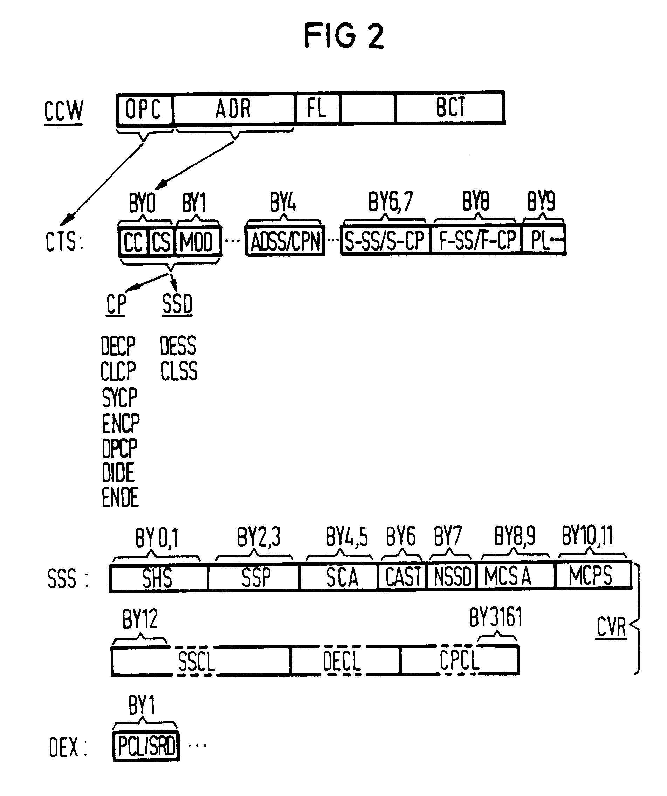

Figur 2 zeigt ein Beispiel für den Aufbau des 64 Bit langen Kanalbefehlswortes CCW, das jeweils einen gesonderten Kanalbefehl zur Kennzeichnung der von der Datenübertragungssteuerung auszuführenden geräteübergreifenden Steueroperationen enthält. Das erste Datenbyte im Kanalbefehlswort CCW gibt den Operationscode OPC für die Spezifikation des jeweiligen Kanalbefehls, z.B. CTS oder SSS, an. Die auf das erste Datenbyte folgenden drei Datenbytes enthalten eine Hauptspeicheradresse ADR, mit der das erste von mehreren aufeinanderfolgenden Steuerbytes im Hauptspeicher gelesen werden kann. Die gesamte Anzahl der Steuerbytes, die zur Steuereinheit der Datenübertragungssteuerung im Peripheriesystem zu übertragen sind, wird durch einen in den letzten beiden Datenbytes des Kanalbefehlswortes CCW enthaltenen Bytezähler angegeben. Neben dem Operationscode, der Hauptspeicheradresse sowie dem Bytezähler sind eine Reihe von Kennzeichenbits FL zur Steuerung von Funktionen während einer Ein-/Ausgabeoperation enthalten.

Als erstes Beispiel eines gesonderten Kanalbefehls, der erfindungsgemäß unter der vorgegebenen und keinem der Speichergeräte zugeordneten Geräteadresse an die Datenübertragungssteuerung übergeben wird, dient der Kanalbefehl CTS. Mit diesem Kanalbefehl werden insgesamt elf Steuerbytes mit darin enthaltenen zusätzlichen Informationen aus dem Hauptspeicher des Datenverarbeitungssystems geholt. Die zusätzlichen Informationen CC, CS und MOD in den ersten beiden Steuerbytes BYO und BY1 geben an, ob sich die auszuführenden Steueroperationen auf einen Cachespeicherbereich CP oder ein Halbleiterspeichergerät SSD oder auf die Zuordnung von Plattenspeichern zu einem Cachespeicherbereich CP beziehen. Dabei enthalten die zusätzlichen Informationen CC, CS, MOD gesonderte Steuerinformationen, anhand derer die einzelnen Steueroperationen von der Datenübertragungssteuerung auszuführen sind.

Die gesonderten Steuerinformationen DECP bzw. DESS veranlassen die Datenübertragungssteuerung, im Halbleiterspeicher einen Cachespeicherbereich CP bzw. ein Halbleiterspeichergerät SSD einzurichten. Dabei werden dem Cachespeicherbereich CP bzw. dem Halbleiterspeichergerät SSD anhand der im Steuerbyte BY4 enthaltenen zusätzlichen Informationen eine Bereichsnummer CPN bzw. eine Geräteadresse ADSS individuell zugeordnet. Darüber hinaus enthalten die zusätzlichen Informationen in den Steuerbytes BY6,7 und BY8 jeweils Angaben über die maximale Speichergröße S-CP bzw. S-SS des einzurichtenden Cachespeicherbereichs CP bzw. des zu bildenden Halbleiterspeichergeräts SSD in Form einer Anzahl von Datenblöcken vorgegebener Blocklänge und Angaben über das jeweilige Blockformat F-CP bzw. F-SS. Ist ein Cachespeicherbereich CP oder ein Halbleiterspeichergerät SSD eingerichtet, so kann er oder es von jeder Zugriffseinheit, z.B. einer Verarbeitungseinheit, des Datenverarbeitungssystems für Schreib- und/oder Lesezugriffe genutzt werden.

Durch die gesonderten Steuerinformationen CLSS bzw. CLCP wird die Datenübertragungssteuerung veranlaßt, ein erzeugtes Halbleiterspeichergerät SSD bzw. einen eingerichteten Cachespeicherbereich CP aufzulösen. Dem eingerichteten Cachespeicherbereich CP können durch das Datenverarbeitungssystem ein oder mehrere Plattenspeicher zugeordnet und damit für den Cachebetrieb zugelassen werden. Die gesonderte Steuerinformation ENDE enthält Angaben über die Zuordnung eines oder mehrerer Plattenspeicher zu jeweils genau einem eingerichteten Cachespeicherbereich CP, während die gesonderte Steuerinformation DIDE die Aufhebung einer derartigen Zuordnung anzeigt.

Eine Auflösung sämtlicher Zuordnungen von Plattenspeichern zu einem Cachespeicherbereich CP ist erst dann durchzuführen, wenn im Cachespeicherbereich CP gespeicherte Daten, die noch kein gültiges Abbild auf einem zugeordneten Plattenspeicher aufweisen, zu diesem Plattenspeicher ausgelagert worden sind. Das Auslagern wird z.B. auf Befehl der Verarbeitungseinheit anhand der gesonderten Steuerinformation SYCP von der Datenübertragungssteuerung eingeleitet, wobei für den betroffenen Cachespeicherbereich ein Steuerkennzeichen bis zum Abschluß der Operation gesetzt und somit der Cachespeicherbereich für Schreibzugriffe vorübergehend gesperrt ist. Das Freigeben des jeweiligen Cachespeicherbereichs für Schreibzugriffe durch Zurücksetzen des Steuerkennzeichens kann anhand der gesonderten Steuerinformation ENCP veranlaßt werden.

Beim Einrichten eines Cachespeicherbereichs CP kann durch die gesonderte Steuerinformation DPCP die in den zusätzlichen Informationen PL des Steuerbytes BY9 angegebene Anzahl von im Vorgriff, d.h. über den aktuell im zugeordneten Plattenspeicher zu lesenden Datenblock hinaus, zu ladenden Datenblöcken festgelegt werden (Prefetching).

Für die im Rahmen der durch den gesonderten Kanalbefehl CTS gekennzeichneten geräteübergreifenden Steueroperationen, beispielsweise beim Einrichten des Halbleiterspeichers als Cache-speicher und/oder als Halbleiterspeichergerät, gewonnenen Verwaltungsdaten werden Tabellen angelegt und im Verwaltungsspeicher CVR gemäß Figur 1 abgespeichert.

Ein weiterer gesonderter Kanalbefehl SSS, der ebenfalls unter der vorgegebenen Geräteadresse an die Datenübertragungssteuerung gerichtet wird, ermöglicht das Abrufen der in den gesonderten Verwaltungsspeicher eingetragenen Verwaltungsdaten. Die gespeicherten Daten betreffen zum einen die Konfiguration des Halbleiterspeichers und zum anderen Statistikdaten, die beim Betrieb des Cachespeichers und/oder der Halbleiterspeichergeräte gesammelt und im Verwaltungsspeicher CVR ebenfalls gespeichert sind. Das Kanalbefehlswort CCW, das den gesonderten Kanalbefehl SSS spezifiziert, enthält wiederum eine Hauptspeicheradresse ADR, von der an die aus dem Verwaltungsspeicher CVR gelesenen Daten im Hauptspeicher des Datenverarbeitungssystems abgelegt werden. Die Anzahl der die zusätzlichen Informationen enthaltenden Steuerbytes BYO,1... wird dabei in gleicher Weise wie beim gesonderten Kanalbefehl CTS durch den Bytezähler BCT eingestellt.

Die in den Steuerbytes BYO,1 angegebenen zusätzlichen Informationen SHS geben die gesamte Speicherkapazität in einer Anzahl von Einheiten einer festgelegten Speichergröße, beispielsweise 1 MByte, des Halbleiterspeichers an, die für die Erzeugung von Halbleiterspeichergeräten und/oder zur Bildung von Cachespeicherbereichen zur Verfügung steht. Eine genauere Spezifikation der aktuell für Halbleiterspeichergeräte bzw. Cachespeicherbereiche belegte Speichergröße kann den zusätzlichen Informationen SSP bzw. SCA in den Steuerbytes BY2,3 bzw. BY4,5 entnommen werden. Die im Steuerbyte BY6 eingetragenen zusätzlichen Informationen CAST kennzeichnen den Status des Halbleiterspeichers im Betrieb als Cachespeicher. Dabei enthalten die einzelnen Steuerinformationen des Steuerbytes BY6 unter anderem Angaben darüber, ob mindestens ein Cachespeicherbereich eingerichtet, diesem eingerichteten Cachespeicherbereich einer oder mehrere Plattenspeicher zugeordnet oder die Benutzung des Cachespeichers insgesamt eingestellt ist. Im Steuerbyte BY7 ist die derzeit benutzbare Anzahl von erzeugten Halbleiterspeichergeräten anhand der zusätzlichen Informationen NSSD abrufbar, während die zusätzlichen Informationen MCSA bzw. MCPS in den Steuerbytes BY8,9 bzw. BY10,11 jeweils die für die Einrichtung von Cachespeicherbereichen bzw. Halbleiterspeichergeräten insgesamt maximal verfügbare Speichergröße kennzeichnen.

Die in den Steuerbytes Byl2...BY3161 enthaltenen zusätzlichen Informationen SSCL, DECL und CPCL bilden Listen mit Zustands- und Konfigurationsinformationen für jedes gebildete Halbleiterspeichergerät, für jeden zum Cachespeicherbetrieb zugelassenen Plattenspeicher und für jeden eingerichteten Cachespeicherbereich. Ein Eintrag in der Liste mit den zusätzlichen Informationen SSCL für ein erzeugtes Halbleiterspeichergerät besteht beispielsweise aus sechs Datenbytes, in denen unter anderem die zugeordnete Geräteadresse, das Blockformat und die Speichergröße enthalten sind.

Die zusätzlichen Informationen DECL eines Eintrags in einer weiteren Liste geben beispielsweise die Geräteadresse eines Plattenspeichers, die Identifikationsnummer des dem Plattenspeicher zugewiesenen Cachespeicherbereichs sowie das Format der Datenblöcke des Plattenspeichers an.

In entsprechender Weise können einem Eintrag in einer dritten Liste anhand der zusätzlichen Informationen CPCL cachespeicherbereichsspezifische Informationen entnommen werden, unter anderem die Identifikationsnummer eines eingerichteten Cachespeicherbereichs, seine Speichergröße sowie Informationen darüber, ob dem Cachespeicherbereich mindestens ein Plattenspeicher zugeordnet oder der Cachespeicherbereich wegen der befohlenen Auslagerung von Daten in einen zugeordneten Plattenspeicher derzeit für Schreibzugriffe gesperrt ist.

Wie bereits oben erwähnt, können in den Tabellen bzw. Listen nicht nur die beim Einrichten der Cachespeicherbereiche und/ oder bei der Bildung der Halbleiterspeichergeräte gewonnenen Verwaltungsdaten, sondern auch während des Betriebs aufgezeichnete Statistikdaten, beispielsweise über Fehler- und Benutzungshäufigkeiten, aus dem gesonderten Verwaltungsspeicher CVR gelesen werden.

Außer den beiden beschriebenen gesonderten Kanalbefehlen CTS und SSS gibt es noch andere Kanalbefehle, die unter der vorgegebenen Geräteadresse an die Datenübertragungssteuerung abgegeben werden können. Dabei werden durch einen gesonderten Kanalbefehl in einem vorgegebenen Steuerbyte näher spezifizierte Daten aus dem Verwaltungsspeicher gelesen und in einem Pufferspeicher der in der Datenübertragungssteuerung vorgesehenen jeweiligen Plattensteuerung zwischengespeichert. Im Anschluß daran bewirkt ein weiterer gesonderter Kanalbefehl, daß die durch den vorhergehenden Kanalbefehl im voraus bereitgestellten und zwischengespeicherten Daten zum Hauptspeicher übertragen werden.

Weitere Steuerfunktionen, mit denen das Peripheriesystem effektiver gestaltet werden kann, sind in einem Kanalbefehl DEX vorgesehen, der bei der Ausführung einer Ein-/Ausgabeoperation bekanntlich zur Festlegung der Größe eines Datenbereichs innerhalb des jeweils adressierten Plattenspeichers dient. Der Kanalbefehl DEX enthält im zweiten aus dem Hauptspeicher gelesenen Steuerbyte BY1 gesonderte Steuerinformationen PCL und SRD, die sich auf die Verwendung wenigstens eines Teils des Halbleiterspeichers als Cachespeicher beziehen.

Dabei haben die Steuerinformationen PCL zur Folge, daß bei Schreib- bzw. Lesezugriffen auf Datenblöcke des jeweils adressierten Plattenspeichers, die im zugeordneten Cachespeicherbereich noch kein Abbild haben (Write Miss bzw. Read Miss), der jeweilige Cachespeicherbereich mit den Blöcken geladen wird. Beim Lesezugriff werden die Datenblöcke vom Plattenspeicher gelesen, in der Plattensteuerung zwischengespeichert und gleichzeitig zur Übertragung zum Hauptspeicher des Datenverarbeitungssystems in den jeweiligen Cachespeicherbereich eingetragen. Beim Schreibzugriff werden die jeweils vom Datenverarbeitungssystem bereitgestellten Datenblöcke im Cachespeicherbereich gespeichert. Unmittelbar danach wird dem Datenverarbeitungssystem der Schreib- bzw. Lesezugriff als erfolgreich beendet gemeldet. Das Auslagern der Datenblöcke vom Cachespeicherbereich zum jeweiligen Plattenspeicher erfolgt zu einem späteren Zeitpunkt, sobald der Cachespeicher nicht von Schreib- oder Lesezugriffen nachfolgender Ein-/Ausgabeoperationen betroffen ist.

Die Daten sind in den einzelnen Plattenspeichern in gleich großen physikalischen Blöcken gespeichert (Festblockformat), so daß im Gegensatz zum Zurückschreiben der Datenblöcke mit variablem Blockformat gegebenenfalls entstehende Fehler in jedem Fall vermieden werden können. Darüber hinaus ist der Halbleiterspeicher durch Batteriepufferung mit integriertem Sicherungsverfahren nicht flüchtig ausgebildet und somit vor Verlusten von Daten bei Netzausfall geschützt.

Bei der Vielzahl von Ein-/Ausgabeoperationen, die vom Peripheriesystem bedient werden, ist die für die Bildung des Cachespeichers zur Verfügung stehende Speicherkapazität im Halbleiterspeicher schnell erreicht. Die in den einzelnen Cachespeicherbereichen enthaltenen Datenblöcke werden als nicht überschreibbare, überschreibbare oder ungültige Blöcke gekennzeichnet. Bei den nicht überschreibbaren Datenblöcken handelt es sich um Schreibdaten, die noch nicht zu einem Plattenspeicher ausgelagert worden sind. Von der Datenübertragungssteuerung wird bei jedem Schreibzugriff auf einen Cachespeicherbereich ein Auftrag zur automatischen Auslagerung der Schreibdaten zum jeweiligen Plattenspeicher erzeugt und in eine Auftragswarteschlange, beispielsweise realisierbar als FIFO (First In First Out)-Speicher, aufgenommen.

Nach der Abarbeitung eines Auftrags in der Auftragswarteschlange werden die zuvor als nicht überschreibbar gekennzeichneten Datenblöcke nach dem Zurückschreiben zu überschreibbaren Datenblöcken. Dadurch, daß den Auslagerungsaufträgen in der Warteschlange eine niedrigere Priorität gegenüber der für die auszuführenden Ein-/Ausgabeoperationen zugewiesen wird, lassen sich eine gleichmäßigere Auslastung des Peripheriesystems erreichen sowie insbesondere freie Speicherplätze in den einzelnen Cachespeicherbereichen für das Eintragen weiterer Schreib- oder Lesedaten schaffen.

Dieses Zurückschreiben von im Cachespeicher eingetragenen Daten auf die Plattenspeicher erfolgt nicht - wie normalerweise - auf Anforderung des übergeordneten Datenverarbeitungssystems, sondern immer dann, wenn im Peripheriesystem freie Zeit für das Auslagern zur Verfügung steht. Die eigentliche Verdrängung der Datenblöcke aus dem Cachespeicherbereich wird nach dem bekannten LRU-Prinzip ausgeführt, wobei nur die überschreibbaren und ungültigen Datenblöcke ersetzt werden, auf die am längsten nicht mehr zugegriffen wurde. Für den Fall, daß im jeweiligen Cachespeicherbereich keine überschreibbaren oder ungültigen Datenblöcke mehr vorliegen (Cachespeicherüberlauf), werden die auszuführenden Lese- und Schreibzugriffe (Write Miss und Read Miss) am Cachespeicher vorbei unmittelbar an die Plattenspeicher gerichtet.

Bei der Durchführung einer Ein-/Ausgabeoperation enthält der Kanalbefehl DEX die gesonderten Steuerinformationen SRD, die eine Erhöhung der Trefferwahrscheinlichkeit im jeweiligen Cachespeicherbereich für die Ausführung nachfolgender Ein-/ Ausgabeoperationen bewirken. Die Steuerinformationen SRD kennzeichnet einen sequentiellen Lesezugriff, bei dem zusätzlich zum aktuell vom adressierten Plattenspeicher zu lesenden Datenblock im Vorgriff weitere Datenblöcke in den jeweiligen Cachespeicherbereich übernommen werden. Diese Steueroperation ist für jede einzelne Ein-/Ausgabeoperation ein- oder ausschaltbar. Unnötige Vorlesevorgänge können auf diese Weise unterdrückt sowie eine abhängig von der zu bearbeitenden Datei festzulegende ausreichende Anzahl von im voraus zu lesenden Datenblöcken im Peripheriesystem dynamisch eingestellt werden. Wegen des im Peripheriesystem verwendeten Festblockformats wird der sequentielle Lesezugriff in Datenblöcken organisiert und verwaltet. Auf diese Weise kann das bekanntlich statisch durchgeführte, jeweils bis zum Ende eines größeren Speicherbereichs (Spur) auf dem Plattenspeicher ausgedehntes Vorauslesen von Daten ersetzt werden.

Der prinzipielle Steuerungsablauf zum Einleiten einer Ein-/ Ausgabeoperation in einem Peripheriesystem mit einer gemeinsamen Datenübertragungssteuerung gemäß Figur 1 ist in Figur 3 anhand eines Flußdiagramms dargestellt. Vor dem Einleiten einer Ein-/Ausgabeoperation durch einen dafür vorgesehenen Maschinenbefehl SSCH (Start Subchannel) ist im Hauptspeicher des Datenverarbeitungssystems ein Kanalprogramm hinterlegt worden, bestehend aus einem einzelnen Kanalbefehlswort oder einer Folge von Kanalbefehlsworten, die nacheinander abgearbeitet werden. Mit dem Maschinenbefehl SSCH werden ein Datenpfad zur Übertragung der Informationen zum Peripheriesystem, beispielsweise ein Kanal eines aus mehreren Kanälen bestehenden Kanalsystems, spezifiziert sowie eine Adresse eines im Peripheriesystem vorgesehenen Speichergeräts, mit dem ein Datentransfer abgewickelt werden soll, mitgeteilt.

Anhand der an die Datenübertragungssteuerung des Peripheriesystems übergebenen Geräteadresse wird festgestellt, ob die gemäß der Erfindung vorgesehene vorgegebene Geräteadresse, z.B. 3F, für das Einleiten geräteübergreifender Steueroperationen angegeben ist. Ist dies nicht der Fall, so wird der an das Peripheriesystem übergebene Inhalt des ersten Kanalbefehlswortes CCW von der Datenübertragungssteuerung gelesen und die Ausführung einer Ein-/Ausgabeoperation E/A mit den in den gesonderten Steuerinformationen PCL und SRD des Kanalbefehls DEX gemäß Figur 2 angegebenen zusätzlichen Steuerfunktionen in bekannter Weise gesteuert und kontrolliert.

Übergibt der Maschinenbefehl SSCH die gesonderte Geräteadresse 3F, wird von der Datenübertragungssteuerung CTR der Inhalt des Kanalbefehlswortes CCW und damit der Operationscode OPC zur Ermittlung eines gesonderten Kanalbefehls, der die jeweils auszuführenden Steueroperationen kennzeichnet, gelesen. Liegt der gesonderte Kanalbefehl CTS vor, werden anschließend die zusätzliche Informationen enthaltenden Steuerbytes BYO..., beginnend bei einer im Kanalbefehlswort CCW spezifizierten Hauptspeicheradresse, an die Datenübertragungssteuerung CTR übergeben. Entsprechend der in den Steuerbytes BY0... enthaltenen zusätzlichen Informationen mit darin spezifizierten gesonderten Steuerinformationen können in dem mit der Datenübertragungssteuerung CTR gekoppelten Halbleiterspeicher HS Cachespeicherbereiche CP und/oder den Plattenspeichern nachgebildete schnelle Halbleiterspeichergeräte SSD eingerichtet oder, wenn diese bereits eingerichtet sind, geändert werden.

Die beim Einrichten des Halbleiterspeichers als Cachespeicher und/oder Halbleiterspeichergerät einschließlich der zu den Cachespeicherbereichen, Halbleiterspeichergeräten oder Plattenspeichern gehörigen Statusinformationen gewonnenen Verwaltungsdaten werden in Form von Tabellen bzw. Listen in einem gesonderten Verwaltungsspeicher CVR der Datenübertragungssteuerung gespeichert.

Für den Fall, daß der gesonderte Kanalbefehl SSS im Kanalbefehlswort CCW festgestellt wird, erfolgt das Lesen von Steuerbytes BY0..., die sämtliche die Konfiguration des Halbleiterspeichers betreffende Daten sowie darüber hinausgehende Statistikdaten enthalten, aus dem gesonderten Verwaltungsspeicher CVR. Anschließend erfolgt deren Übertragung vom Peripheriesystem zum Hauptspeicher des Datenverarbeitungssystems.

## Patentansprüche

1. Verfahren zur Steuerung eines Peripheriesystems (P-SYS), bestehend aus Speichergeräten, insbesondere Plattenspeichern (PSO...), mit angeschlossenen gerätenahen Steuerungen (CONT) und einer gemeinsamen Datenübertragungssteuerung (CTR), der von einem Datenverarbeitungssystem (D-SYS) jeweils eine Geräteadresse zur Ansteuerung eines der Speichergeräte und mindestens ein Kanalbefehl (CCW) zur Durchführung einer Ein-/Ausgabeoperation übergeben wird, **dadurch gekennzeichnet**, daß von den möglichen Geräteadressen eine vorgegebene und keinem der Speichergeräte (PSO...) zugeordnete Geräteadresse (z.B. 3F) dazu verwendet wird, innerhalb des Peripheriesystems (P-SYS) von der Datenübertragungssteuerung (CTR) auszuführende geräteübergreifende Steueroperationen einzuleiten, wobei die jeweils auszuführenden Steueroperationen durch gesonderte Kanalbefehle (z.B. CTS,SSS) gekennzeichnet werden.

2. Verfahren nach Anspruch 1, **dadurch gekennzeichnet,** daß die geräteübergreifenden Steueroperationen einen mit der Datenübertragungssteuerung (CTR) gekoppelten, gesonderten Halbleiterspeicher (HS) betreffen.

3. Verfahren nach Anspruch 2, **dadurch gekennzeichnet,** daß der Halbleiterspeicher (HS) als gemeinsamer Cachespeicher (CAM) für die in Verbindung mit der Datenübertragungssteuerung (CTR) kontrollierten Speichergeräte (PSO...) betrieben wird.

4. Verfahren nach Anspruch 2, **dadurch gekennzeichnet,** daß der Halbleiterspeicher (HS) zur Nachbildung von üblicherweise den von der Datenübertragungssteuerung (CTR) kontrollierten Speichergeräten (PSO...) entsprechenden Halbleiterspeichergeräten (SSD) verwendet wird, die von der Datenübertragungssteuerung (CTR) in gleicher Weise wie die üblichen Speichergeräte (PSO...) des Peripheriesystems (P-SYS) anhand individuell zugeordneter Geräteadresse (ADSS) angesteuert und kontrolliert werden.

5. Verfahren nach Anspruch 3 und 4, **dadurch gekennzeichnet,** daß der Halbleiterspeicher (HS) als gemeinsamer Speicher zum einen Teil als Cachespeicher (CAM) und zum anderen Teil für die Bildung von Halbleiterspeichergeräten (SSD) verwendet wird, wobei ein direkter Datenaustausch zwischen dem Cachespeicher (CAM) und den Halbleiterspeichergeräten (SSD) ausgeschlossen ist.

6. Verfahren nach einem der Ansprüche 2 bis 5, **dadurch gekennzeichnet,** daß im Rahmen der geräteübergreifenden Steueroperationen zusätzliche Informationen (z.B. CC,CS...) zur Verwendung des Halbleiterspeichers (HS) als Cachespeicher (CAM) und/oder für die Bildung von Halbleiterspeichergeräten (SSD) an die Datenübertragungssteuerung (CTR) übergeben werden.

7. Verfahren nach Anspruch 6, **dadurch gekennzeichnet,** daß die zusätzlichen Informationen (z.B. CC,CS...) gesonderte Steuerinformationen (DECP,DESS) zum Einrichten von Cachespeicherbereichen (CP) und/oder Halbleiterspeichergeräten (SSD) im Halbleiterspeicher (HS) enthalten.

8. Verfahren nach Anspruch 7, **dadurch gekennzeichnet,** daß die zusätzlichen Informationen (z.B. CC,CS...) gesonderte Steuerinformationen (ENDE) über die Zuordnung von mindestens einem Speichergerät (PSO...) zu jeweils genau einem eingerichteten Cachespeicherbereich (CP) enthalten.

9. Verfahren nach Anspruch 7 oder 8, **dadurch gekennzeichnet,** daß die zusätzlichen Informationen (z.B. CC,CS...) beim Einrichten der Cachespeicherbereiche (CP) und/oder Halbleiterspeichergeräte (SSD) jeweils Angaben über die maximale Speichergröße (S-CP,S-SS) in Form einer vorgegebenen Anzahl von Datenblöcken vorgegebener Blocklänge und Angaben über das jeweilige Blockformat (F-CP,F-SS) enthalten.

10. Verfahren nach einem der Ansprüche 7 bis 9, **dadurch gekennzeichnet,** daß die zusätzlichen Informationen (z.B. CC,CS...) beim Einrichten der Cachespeicherbereiche (CP) jeweils Angaben (DPCP) über die über den aus dem zugeordneten Speichergerät (PSO...) aktuell zu lesenden Datenblock hinausgehende Anzahl von im voraus zu lesenden Datenblöcken enthalten.

11. Verfahren nach einem der Ansprüche 7 bis 10, **dadurch gekennzeichnet,** daß die zusätzlichen Informationen (z.B. CC,CS...) gesonderte Steuerinformationen (CLCP,CLSS) enthalten, anhand derer von der Datenübertragungssteuerung (CTR) das Auflösen eines eingerichteten Cachespeicherbereichs (CP) und/oder Halbleiterspeichergeräts (SSD) veranlaßt wird.

12. Verfahren nach einem der Ansprüche 7 bis 11, **dadurch gekennzeichnet,** daß die zusätzlichen Informationen (z.B. CC,CS...) gesonderte Steuerinformationen (SYCP) enthalten, anhand derer von der Datenübertragungssteuerung (CTR) die Auslagerung von in einem Cachespeicherbereich (CP) eingetragenen Daten, die noch nicht in einem zugeordneten Speichergerät (PSO...) gespeichert sind, zum Speichergerät (PSC...) eingeleitet und sämtliche Zuordnungen von Speichergeräten (PSO...) zu dem Cachespeicherbereich (CP) aufgehoben werden.

13. Verfahren nach einem der Ansprüche 7 bis 12, **dadurch gekennzeichnet,** daß beim Einrichten des Halbleiterspeichers (HS) als Cachespeicher (CAM) und/ oder als Halbleiterspeichergerät (SSD) sowie bei deren Betrieb gewonnene Verwaltungsdaten in einem gesonderten Verwaltungsspeicher (CVR) gespeichert werden.

14. Verfahren nach Anspruch 13, **dadurch gekennzeichnet**, daß im Rahmen der geräteübergreifenden Steueroperation von der Datenübertragungssteuerung (CTR) die Verwaltungsdaten aus dem Verwaltungsspeicher (CVR) an das Datenverarbeitungssystem (D-SYS) übergeben werden.

15. Verfahren nach Anspruch 3 oder 5, **dadurch gekennzeichnet,** daß bei der Durchführung einer Ein-/Ausgabeoperation ein Kanalbefehl (DEX) gesonderte Steuerinformationen (PCL,SRD) enthält, anhand derer von der Datenübertragungssteuerung (CTR) das Laden von Datenblöcken, die kein Abbild im Cachespeicher (CAM) aufweisen, in den Cache-speicher (CAM) für die jeweilige Ein-/Ausgebeoperation veranlaßt und die Ein-/AUsgabeoperation als erfolgreich ausgeführt zum Datenverarbeitungssystem (D-SYS) gemeldet werden.

16. Verfahren nach Anspruch 15, **dadurch gekennzeichnet,** daß bei einem Schreibzugriff auf den Cachespeicher (CAM) von der Datenübertragungssteuerung (CTR) ein Auftrag zur Auslagerung der eingeschriebenen Datenblöcke erzeugt und in eine Auftragswarteschlange eingetragen wird, und daß ein gespeicherter Auslagerungsauftrag jeweils dann ausgeführt wird, wenn der Cachespeicher (CAM) nicht von Zugriffen belegt ist.

17. Verfahren nach Anspruch 15, **dadurch gekennzeichnet**, daß bei einem Lesezugriff auf den Cachespeicher (CAM) sequentiell auf den aktuell vom Speichergerät (PSO...) zu lesenden Datenblock folgende Datenblöcke im Vorgriff gelesen und im Cachespeicher (CAM) gespeichert werden, wobei das Vorauslesen für jede Ein-/Ausgabeoperation individuell einstellbar ist.

## Claims

1. Method for controlling a peripheral system (P-SYS), comprising storage devices, in particular disk stores (PS0...), with connected controllers (CONT) in proximity to the devices, and with a common data transfer controller (CTR), to which a data processing system (D-SYS) transfers a respective device address for selecting one of the storage devices and at least one channel command (CCW) for carrying out an input/output operation, characterized in that of the possible device addresses, a predetermined device address (for example 3F) assigned to none of the storage devices (PS0...) is used to initiate cross-device control operations to be executed by the data transfer controller (CTR) within the peripheral system (P-SYS), the respective control operations to be executed being identified by separate channel commands (for example CTS, SSS).

2. Method according to Claim 1, characterized in that the cross device control operations are relating to a separate semiconductor memory (HS) coupled to the data transfer controller (CTR).

3. Method according to Claim 2, characterized in that the semiconductor memory (HS) is operated as a common cache memory (CAM) for the storage devices (PS0...) which are supervised in connection with the data transfer controller (CTR).

4. Method according to Claim 2, characterized in that the semiconductor memory (HS) is used to simulate semiconductor storage devices (SSD), which usually correspond to the storage devices (PSO...) supervised by the data transfer controller (CTR) and are selected and supervised by the data transfer controller (CTR) using an individually assigned device address (ADSS) in the same way as the customary storage devices (PS0...) of the peripheral system (P-SYS).

5. Method according to Claims 3 and 4, characterized in that the semiconductor memory (HS) is used as a common memory in part as a cache memory (CAM) and in part for the formation of semiconductor storage devices (SSD), a direct data exchange between the cache memory (CAM) and the semiconductor storage devices (SSD) being precluded.

6. Method according to one of Claims 2 to 5, characterized in that within the scope of the cross-device control operations, additional information items (for example CC, CS...) for the use of the semiconductor memory (HS) as a cache memory (CAM) and/or for the formation of semiconductor storage devices (SSD) are transferred to the data transfer controller (CTR).

7. Method according to Claim 6, characterized in that the additional information items (for example CC, CS...) contain separate control information items (DECP, DESS) for setting up cache memory areas (CP) and/or semiconductor storage devices (SSD) in the semiconductor memory (HS).

8. Method according to Claim 7, characterized in that the additional information items (for example CC, CS...) contain separate control information items (ENDE) regarding the assignment of at least one storage device (PSO...) to in each case exactly one cache memory area (CP) that has been set up.

9. Method according to claim 7 or 8, characterized in that the additional information items (for example CC, CS...) when setting up the cache memory areas (CP) and/or semiconductor storage devices (SSD) each contain details about the maximum storage size (S-CP, S-SS) in the form of a predetermined number of data blocks having a predetermined block length and details about the respective block format (F-CP, F-SS).

10. Method according to one of Claims 7 to 9, characterized in that the additional information items (for example CC, CS...) when setting up the cache memory areas (CP) in each case contain details (DPCP) about the number of data blocks to be prefetched which goes beyond the data block that is currently to be read from the assigned storage device (PS0...).

11. Method according to one of Claims 7 to 10, characterized in that the additional information items (for example CC, CS...) contain separate control information items (CLCP, CLSS), which are used by the data transfer controller (CTR) to cause the resolution of a set-up cache memory area (CP) and/or semiconductor storage device (SSD).

12. Method according to one of Claims 7 to 11, characterized in that the additional information items (for example CC, CS...) contain separate control information items (SYCP), which are used by the data transfer controller (CTR) to initiate the swapping of data, which are entered in a cache memory area (CP) and are not yet stored in an assigned storage device (PS0...), to the storage device (PS0...) and to cancel all assignments of storage devices (PS0...) to the cache memory area (CP).

13. Method according to one of Claims 7 to 12, characterized in that management data obtained when setting up the semiconductor memory (HS) as a cache memory (CAM) and/or as a semiconductor storage device (SSD) and also during operation thereof are stored in a separate management store (CVR).

14. Method according to Claim 13, characterized in that within the scope of the cross-device control operation, the management data are transferred from the management store (CVR) to the data processing system (D-SYS) by the data transfer controller (CTR).

15. Method according to Claim 3 or 5, characterized in that when an input/output operation is carried out, a channel command (DEX) contains separate control information items (PCL, SRD), which are used by the data transfer controller (CTR) to cause the loading of data blocks, which are not mapped in the cache memory (CAM), into the cache memory (CAM) for the respective input/output operation and to report successful execution of the input/output operation to the data processing system (D-SYS).

16. Method according to Claim 15, characterized in that in the event of a write access to the cache memory (CAM), a job for swapping the written data blocks is generated by the data transfer controller (CTR) and entered into a job queue, and in that a stored swapping job is in each case executed when the cache memory (CAM) is not occupied by accesses.

17. Method according to Claim 15, characterized in that in the event of a read access to the cache memory (CAM), data blocks which sequentially follow the data block which is currently to be read from the storage device (PSO...) are prefetched and stored in the cache memory (CAM), it being possible to set the prefetching individually for each input/output operation.

## Revendications

1. Procédé pour commander un système (P-SYS) périphérique, constitué d'appareils de mémorisation, notamment de mémoires (PSO...) à disque, comportant des commandes (CONT) raccordées proches des appareils et une commande (CTR) de transmission de données commune, à laquelle il est transmis par un système (D-SYS) de traitement de données une adresse d'appareil pour la commande de l'un des appareils de mémorisation et au moins une instruction (CCW) de canal pour exécuter une opération d'entrée/sortie, caractérisé en ce que, parmi les adresses d'appareil possibles, on utilise une adresse (par exemple 3F) d'appareil qui est prescrite et qui n'est pas associée à l'un des appareils (PSO...) de mémorisation pour initier par la commande (CTR) de transmission de données, à l'intérieur du système (P-SYS) périphérique, des opérations de commande à exécuter qui se propagent aux appareils, les opérations de commande à exécuter étant caractérisées par des instructions (par exemple CTS, SSS) spéciales.

2. Procédé suivant la revendication 1, caractérisé en ce que les opérations de commande qui se propagent aux appareils concernent une mémoire (HS) à semiconducteurs spéciale, couplée à la commande (CTR) de transmission de données.

3. Procédé suivant la revendication 2, caractérisé en ce que l'on fait fonctionner la mémoire (HS) à semiconducteurs comme mémoire (CAM) cache commune pour les appareils (PSO...) de mémorisation contrôlés en liaison avec la commande (CTR) de transmission de données.

4. Procédé suivant la revendication 2, caractérisé en ce que l'on utilise la mémoire (HS) à semiconducteurs pour simuler des appareils (SSD) de mémorisation à semiconducteurs, qui correspondent habituellement aux appareils (PSO...) de mémorisation contrôlés par la commande (CTR) de transmission de données et qui sont commandés et contrôlés, à l'aide d'une adresse (ADSS) d'appareil associée individuellement, par la commande (CTR) de transmission de données, de la même manière que les appareils (PSO...) de mémorisation usuels du systéme (P-SYS) périphérique.

5. Procédé suivant la revendication 3 et 4, caractérisé en ce que l'on utilise la mémoire (HS) à semiconducteurs comme mémoire commune, pour une part comme mémoire (CAM) cache, et pour l'autre part, pour la formation d'appareils (SSD) de mémorisation à semiconducteurs, un échange de données direct entre la mémoire (CAM) cache et les appareils (SSD) de mémorisation à semiconducteurs étant exclus.

6. Procédé suivant l'une des revendications 2 à 5, caractérisé en ce que, dans le cadre des opérations de commande qui se propagent aux appareils, des informations (par exemple CC, CS...) supplémentaires sont transmises à la commande (CTR) de transmission de données pour l'utilisation de la mémoire (HS) à semiconducteurs comme mémoire (CAM) cache et/ou pour la formation d'appareils (SSD) de mémorisation à semiconducteurs.

7. Procédé suivant la revendication 6, caractérisé en ce que les informations (par exemple CC, CS...) supplémentaires contiennent des informations (DECP, DESS) de commande spéciales pour installer des zones (CP) de mémoire cache et/ou des appareils (SSD) de mémorisation à semiconducteur dans la mémoire (HS) à semiconducteurs.

8. Procédé suivant la revendication 7, caractérisé en ce que les informations (par exemple CC, CS...) supplémentaires contiennent des informations (ENDE) de commande spéciales concernant l'association d'au moins un appareil (PSO...) de mémorisation à exactement une zone (CP) de mémoire cache installée.

9. Procédé suivant la revendication 7 ou 8, caractérisé en ce que les informations (par exemple CC, CS...) supplémentaires contiennent, lors de l'installation des zones (CP) de mémoire cache et/ou des appareils (SSD) de mémorisation à semiconducteurs, des indications sur la dimension (S-CP, SSS) de mémoire maximum sous la forme d'un nombre prescrit de blocs de données d'une longueur de blocs prescrite et des indications sur le format (F-CP, F-SS) de blocs associés.

10. Procédé suivant l'une des revendications 7 à 9, caractérisé en ce que les informations (par exemple CC, CS...) supplémentaires contiennent, pour l'installation des zones (CP) de mémoire cache, des indications (DPCP) sur le nombre de blocs de données à lire à l'avance qui va au-delà du bloc de données à lire sur le moment dans l'appareil (PSO...) de mémorisation associé.

11. Procédé suivant l'une des revendications 7 à 10, caractérisé en ce que les informations (par exemple CC, CS...) supplémentaires contiennent des informations (CLCP, CLSS) de commande spéciales, à l'aide desquelles le détachement d'une zone (CP) de mémoire cache et/ou d'un appareil (SSD) de mémorisation à semiconducteurs est provoqué par la commande (CTR) de transmission de données.

12. Procédé suivant l'une des revendications 7 à 11, caractérisé en ce que les informations (par exemple CC, CS...) supplémentaires contiennent des informations (SYCP) de commande spéciales, à l'aide desquelles, par la commande (CTR) de transmission de données, le transfert de données, qui sont entrées dans une zone (CP) de mémoire cache et qui ne sont pas encore mémorisées dans un appareil (PSO...) de mémoire associé, à l'appareil (PSO...) de mémorisation est initié et toutes les associations d'appareils (PSO...) de mémorisation à la zone (CP) de mémoire cache sont supprimées.

13. Procédé suivant l'une des revendications 7 à 12, caractérisé en ce que des données de gestion recueillies, lors de l'installation de la mémoire (HS) à semiconducteurs comme mémoire (CAM) cache et/ou comme appareils (SSD) de mémorisation à semiconducteurs, ainsi que lors de leur fonctionnement, sont mémorisées dans une mémoire (CVR) de gestion spéciale.

14. Procédé suivant la revendication 13, caractérisé en ce que, dans le cadre de l'opération de commande se propageant aux appareils, les données de gestion provenant de la mémoire (CVR) de gestion sont transmises par la commande (CTR) de transmission de données au système (D-SYS) de traitement de données.

15. Procédé suivant la revendication 3 ou 5, caractérisé en ce que, lors de l'exécution d'une opération d'entrée/sortie, une instruction (DEX) de canal contient des informations (PCL, SRD) de commande spéciales, à l'aide desquelles, par la commande (CTR) de transmission de données, il est provoqué le chargement des blocs de données, qui ne comportent pas de reproduction dans la mémoire (CAM) cache, dans la mémoire (CAM) cache pour l'opération d'entrée/sortie associée et l'opération d'entrée/sortie est annoncée au système (D-SYS) de traitement de données comme ayant été exécutée avec succès.

16. Procédé suivant la revendication 15, caractérisé en ce que, lors d'un accès d'écriture à la mémoire (CAM) cache, une instruction de déstockage des données inscrites est provoquée par la commande (CTR) de transmission de données et est enregistrée dans une file d'attente d'instructions, et en ce qu'une instruction de déstockage mémorisée est exécutée si la mémoire (CAM) cache n'est pas occupée par des accès.

17. Procédé suivant la revendication 15, caractérisé en ce que, lors d'un accès d'écriture à la mémoire (CAM) cache, des blocs de données suivant séquentiellement le bloc de données à lire sur le moment par l'appareil (PSO...) de mémorisation sont lus par anticipation et mémorisés dans la mémoire (CAM) cache, la lecture à l'avance pouvant être établie individuellement pour chaque opération d'entrée/sortie.
